# EUROPÄISCHE PATENTANMELDUNG

(11) **EP 1 206 158 A2**
(43) Veröffentlichungstag der Anmeldung: **15.05.2002**
(21) Anmeldenummer: 01126133.6
(22) Anmeldetag: 02.11.2001
(51) Int. Cl.: H04Q 11/00

(54) **Optisches Koppelfeld**

(30) Priorität: 09.11.2000 DE 10055476
(71) Anmelder: SIEMENS AKTIENGESELLSCHAFT, 80333 München (DE)
(72) Erfinder: Drews, Wolfgang, Dr., 82194 Gröbenzell (DE)

(57) **Zusammenfassung**

Die Erfindung betrifft, einen konfigurierbaren optischen Koppler zum Ein- und Auskoppeln von Datenströmen aus und in einen optischen WDM-Datenübertragungsring, wobei mehrere MxN-Koppler, vorzugsweise 4 quadratische NxN-Durchgangskoppler, derart über ein Netzwerk von Schaltern und Verzweigern zusammen geschaltet werden, dass möglichst beliebige Verbindungen zwischen den in die Datenstrecke eingeschalteten Ein- und Ausgängen und zwischen abzweigenden Zu- und Abgängen geschaltet werden können, wobei vorzugsweise auch gleichzeitig eine mögliche Ersatzschaltung der optischen Kanäle erreicht werden kann.

## Beschreibung

Die Erfindung betrifft ein optisches Koppelfeld als Zwischenglied in einer optischen Datenübertragungsstrecke eines WDM-Systems mit einer Vielzahl an Kanälen zur variablen Ein- und/oder Auskopplung einer Vielzahl optischer Kanäle.

Aufgrund der rasanten Zunahme des Datenverkehrs in Kommunikationsnetzen werden von Netzbetreibern zunehmend höhere Transportkapazitäten gefordert, die im Backbone-Bereich bei Vielfachen der Basiskapazitäten 2.5 Gb/s, 10 Gb/s und künftig auch 40 Gb/s liegen. Eine solche Basiskapazität entspricht dabei einem bestimmten optischen Kanal (OCh), der wiederum einer bestimmten Trägerfrequenz entspricht. Das Multiplexen dieser optischen Kanäle auf einer optischen Faser erfolgt hierbei zunehmend mit Hilfe der optischen Wellenlängenmultiplextechnik (WDM). Neben einfachen Punkt-zu-Punkt-Verbindungen werden auch vermaschte Netzstrukturen und Ringstrukturen benötigt. Diese Netzstrukturen erfordern zum Anschluß von Datensystemen das Ein- und Auskoppeln von optischen Kanälen aus und in die optischen Datenübertragungsstrecken.

Ein vollsymmetrischer NxN-Koppler erfordert einen Realisierungsaufwand proportional zu N². Dieser Aufwand läßt sich jedoch bedeutend reduzieren, wenn anstelle einer vollen Symmetrie nur bestimmte Vorzugskombinationen von optischen Signalen in einer Koppelmatrix realisiert werden müssen.

Es ist Aufgabe der Erfindung, einen flexiblen und mit vorhandenen Grundbausteinen herstellbaren flexiblen optischen Koppler zum variablen Ein- und Auskoppeln mehrerer optischer Kanäle aus einem WDM-Ringübertragungsnetz zu finden. Solche, in Verbindung mit einem Wellenlängenmultiplexsystem eingesetzten Geräte werden auch als optische Add-/Drop-Multiplexer (OADM) bezeichnet.

Die Aufgabe wird durch die Merkmale des ersten Patentanspruches gelöst.

Der Erfinder hat erkannt, dass es möglich ist, ein konfigurierbares Koppelfeld mit Hilfe vorhandener MxN-Koppler und einem Netzwerk aus Mehrfachschaltern und Mehrfachverzeigern aufzubauen, das über eine entsprechende Steuersoftware flexibel und schnell von außen konfiguriert werden kann.

Weiterhin hat sich gezeigt, dass ein erfindungsgemäßes OADM auch verschiedene Ersatzschalteverfahren verwirklichen kann, wodurch sich die Zuverlässigkeit des optischen Transportnetzes, in dem der erfindungsgemäße OADM eingesetzt wird, bei Faserfehlern wesentlich und auf einfache Weise erhöhen läßt.

Zur Ersatzschaltung optischer Kanäle können verschiedene Verfahren verwendet werden. So können für Ringarchitekturen die Verfahren "Optical Channel Dedicated Protection Ring" (OCh DPRING) und "Optical Channel Shared Protection Ring" (OCh SPRING) verwendet werden. Die Implementierung dieser Ersatzschalteverfahren kann innerhalb des erfindungsgemäßen Koppelfeldes erfolgen, da hier ein Zugriff auf die einzelnen optischen Kanäle erfolgt.

Entsprechend diesem Erfindungsgedanken schlägt der Erfinder zunächst ein unidirektionales optisches Koppelfeld als Zwischenglied in einer optischen Datenübertragungsstrecke eines WDM-Systems mit einer Vielzahl an Kanälen zur variablen Ein- und/oder Auskopplung einer Vielzahl optischer Kanäle, wobei eine erste Seite (West-Seite) mit N Eingangskanälen und eine zweite Seite (Ost-Seite) mit N Ausgangskanälen zur Einbindung in die optische Datenübertragungsstrecke und weiterhin eine dritte Seite (Zubringer-Seite) mit einer Vielzahl ein- und/oder ausgekoppelter Kanäle vorgesehen sind, wobei auf der ersten Seite ein MxN-Eingangskoppler für die N Eingangskanäle und auf der zweiten Seite ein MxN-Ausgangskoppler für die N Ausgangskanäle vorgesehen ist, und wobei die erste und zweite Seite durch ein variabel schaltbares Netzwerk (ADP-Modul) untereinander und mit den Ein- und Ausgangskanälen der dritten Seite verbunden sind. Grundbestandteile eines solchen großen Koppelfeldes können einfache handelsübliche optische MxN-Koppler, optische Schalter und Verzweiger sein, die in der erfindungsgemäßen Weise zusammengeschaltet werden.

In einer Fortführung des Erfindungsgedanken wird auch vorgeschlagen, das optische Koppelfeld bidirektional auszuführen, indem zusätzlich auf der ersten Seite ein MxN-Ausgangskoppler für zusätzliche N Ausgangskanäle und auf der zweiten Seite ein MxN-Eingangskoppler für zusätzliche N Eingangskanäle vorgesehen werden.

In einer bevorzugten Ausgestaltung des erfindungsgemäßen optischen Koppelfeldes schlägt der Erfinder weiterhin vor, dass das variabel schaltbare Netzwerk an mindestens einem Eingangskanal hinter dem MxN-Eingangskoppler der ersten und/oder zweiten Seite einen Verteiler mit einem Verteilereingang und mindestens zwei Verteilerausgängen aufweist, wobei mindestens ein Verteilerausgang zu einem Ausgangskanal auf der jeweils gegenüberliegenden Seite und mindestens ein Verteilerausgang zu einem Ausgang auf der dritten Seite führt.

Weiterhin kann das variabel schaltbare Netzwerk an mindestens einem Ausgangskanal vor dem MxN-Ausgangskoppler der ersten und/oder zweiten Seite einen steuerbaren Schalter mit mindestens zwei Schaltereingängen und einem Schalterausgang aufweisen, wobei mindestens ein Schaltereingang mit einem Eingangskanal auf der jeweils gegenüberliegenden ersten oder zweiten Seite und mindestens ein Schaltereingang zu einem Eingangskanal auf der dritten Seite führt.

Auch kann das variabel schaltbare Netzwerk auf der dritten Seite (Zubringer-Seite) an mindestens einem Eingangskanal einen Verteiler mit einem Verteilereingang und mindestens zwei Verteilerausgängen aufweist, wobei mindestens ein Verteilerausgang zu einem Ausgangskanal auf der ersten oder zweiten Seite führt.

In einer weiteren Ausgestaltung ist auch vorgesehen, dass das variabel schaltbare Netzwerk an mindestens einem Ausgangskanal einen Schalter (Zubringer-Schalter) mit einem Schalterausgang und mindestens zwei Schaltereingängen aufweist, wobei mindestens ein Schaltereingang zu einem Eingangskanal auf der ersten oder zweiten Seite führt.

Als Teilkomponenten können in dem erfindungsgemäßen optischen Koppelfeld quadratische Koppler, also NxN-Koppler, vorgesehen werden. Hierdurch läßt sich beispielsweise durch das Zusammenschalten von 4 NxN-Kopplern ein 4Nx4N-Koppelfeld für einen OADM erstellen, wobei vorzugsweise auf der dritten Seite (Zubringer-Seite) N Schalter und N Verteiler vorgesehen sind.

Das variable Netzwerk kann dabei derart aufgebaut sein, dass sich eine einfach-redundante (1+1)-Kanalersatzschaltung oder eine Ring-Ersatzschaltung mit verteilter Redundanz (shared protection) ergibt, wie sie in bestehenden Normen, z.B. ITU-T G.841, definiert ist.

Weitere Merkmale der Erfindung ergeben sich aus den Unteransprüchen und der nachfolgenden Beschreibung der Ausführungsbeispiele unter Bezugnahme auf die Zeichnungen.

Im folgenden wird die Erfindung anhand der Zeichnungen näher beschrieben:
- Figur 1:: Verkehrsflußrichtungen in einem OADM;
- Figur 2:: Mögliche Verbindungsstrukuren im ADP-Modul für ein bidirektionales Koppelfeld;
- Figur 3:: Koppelfeldarchitektur mit Unterstützung von optischer (1+1)-Kanalersatzschaltung in Ringen (DPRING);
- Figur 3a:: Variante zu Figur 3;
- Figur 4:: Koppelfeldarchitektur mit Unterstützung von optischer Kanalersatzschaltung mit verteilter Redundanz (shared protection) in 2-Faser-Ringen (2F-SPRING) ;
- Figur 5:: Koppelfeldarchitektur mit Unterstützung von optischer Kanalersatzschaltung mit verteilter Redundanz (shared protection) in 4-Faser-Ringen (4F-SPRING);
- Figur 6:: Mögliche Verbindungsstrukuren im ADP-Modul für ein unidirektionales Koppelfeld;
- Figur 7:: einfache unidirektionale Koppelfeldarchitektur.

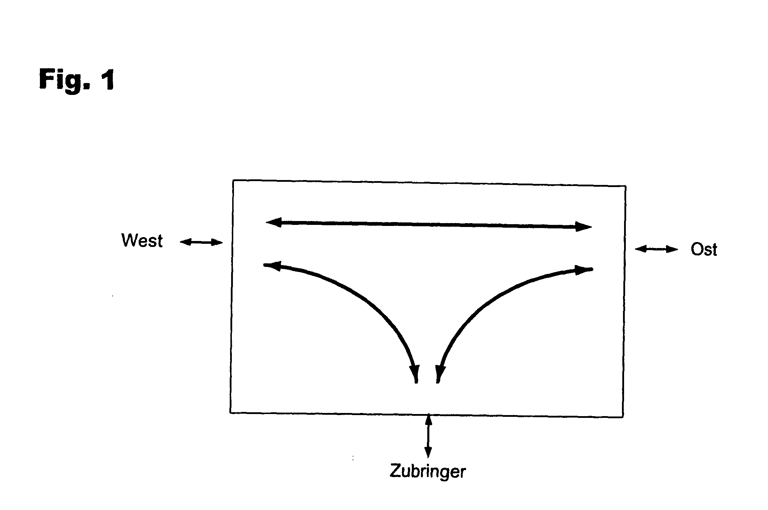

Die Figur 1 zeigt die prinzipiellen optischen Verkehrsflußrichtungen in einem OADM.

Hierin wird schematisch dargestellt, wie jeder eingehende Kanal auf der West- oder Ost-Seite als ausgehender Kanal zur jeweils gegenüberliegenden Seite verbunden wird. Weiterhin zeigt die Übersicht, dass Verbindungswege sowohl von der West- als auch Ost-Seite zu und von der Zubringer-Seite vorgesehen werden. Diese Verkehrsflußrichtungen sollen mit den folgenden Koppelfeldstrukturen realisiert werden können.

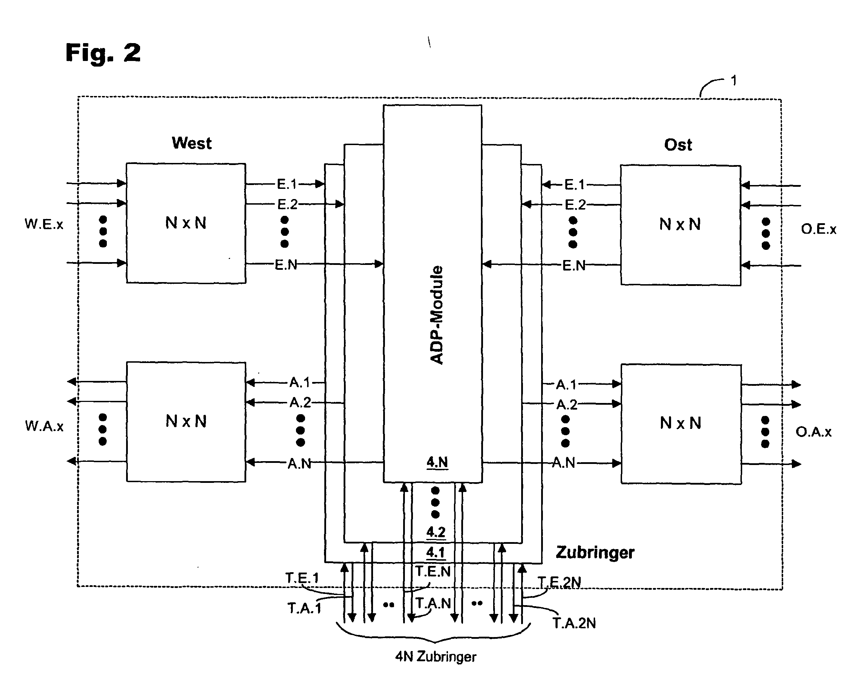

Die Figur 2 zeigt die funktionale Aufteilung einer bevorzugten Ausführung eines bidirektionalen optischen (4Nx4N)-Koppelfeldes 1. An der West-Seite (erste Seite) und der Ost-Seite (zweite-Seite) befinden sich jeweils ein handelsüblicher quadratischer (NxN)-Eingangs- und ein (NxN)-Ausgangskoppler 2, die eine wahlfreie Ein- und Auskopplung für jeden der N optischen Eingangskanäle W.E.1-W.E.N, O.E.1-O.E.N und Ausgangskanäle W.A.1-W.A.N, O.A.1-O.A.N an der jeweiligen Seite ermöglichen. In der Mitte befinden sich N Add-/Drop and Protection-Module (ADP-Module) 4.1-4.N, die entweder die erforderliche Ein- beziehungsweise Auskopplung der ausgewählten optischen Kanäle an der Zubringer-Seite (dritte Seite) T.E.1-T.E.2N, T.A.1-T.A.2N, oder eine Ost-West-Durchverbindung beziehungsweise West-Ost-Durchverbindung zwischen optischen Ein- und Ausgangskanälen realisieren.

Jedes ADP-Modul 4.1 ... 4.N ermöglicht den Zugriff auf je 2 Zubringer-Eingangs- und Ausgangskanäle T.E.X, T.E.X+1, T.A.X, T.A.X+1. Für einen OADM gemäß den in Figur 1 gezeigten Verkehrsflußrichtungen brauchen nur Verbindungen zwischen der West- und Zubringer-Seite, zwischen Ost- und Zubringer-Seite, sowie zwischen Ost- und West-Seite in jedem ADP-Modul vorgesehen werden. Schleifenverbindungen Ost-Ost, West-West und Zubringer-Zubringer brauchen dagegen nicht vorgesehen werden, wodurch der Realisierungsaufwand insgesamt niedrig gehalten werden kann.

Zur Realisierung von komplexen Ersatzschaltemechanismen, insbesondere solcher mit verteilter Redundanz in 2- bzw. 4-Faser-Ringen, lassen sich auch zwei solcher ADP-Module zu einem komplexeren ADP-Modul zusammenfassen. Hierbei werden auf Ost- bzw. West-Seite eines OADM jeweils ein optischer Betriebskanal und ein optischer Ersatzkanal von einem ADP-Modul angesteuert. Je nach Ersatzschalteverfahren für die einzelnen optischen Kanäle lassen sich unterschiedliche ADP-Module mit unterschiedlicher Komplexität verwenden, die jedoch alle aus heute verfügbaren optischen Komponenten aufgebaut sind.

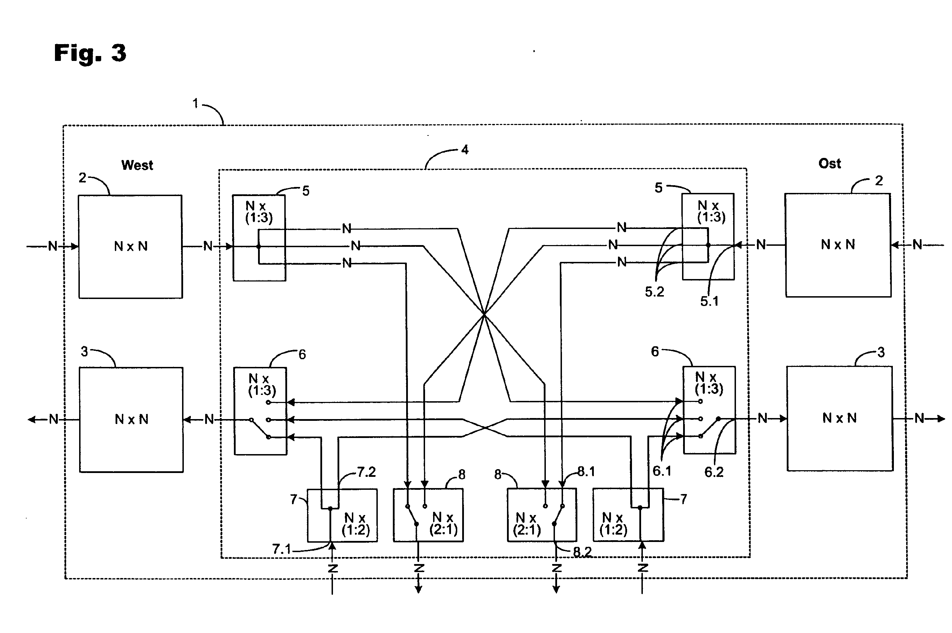

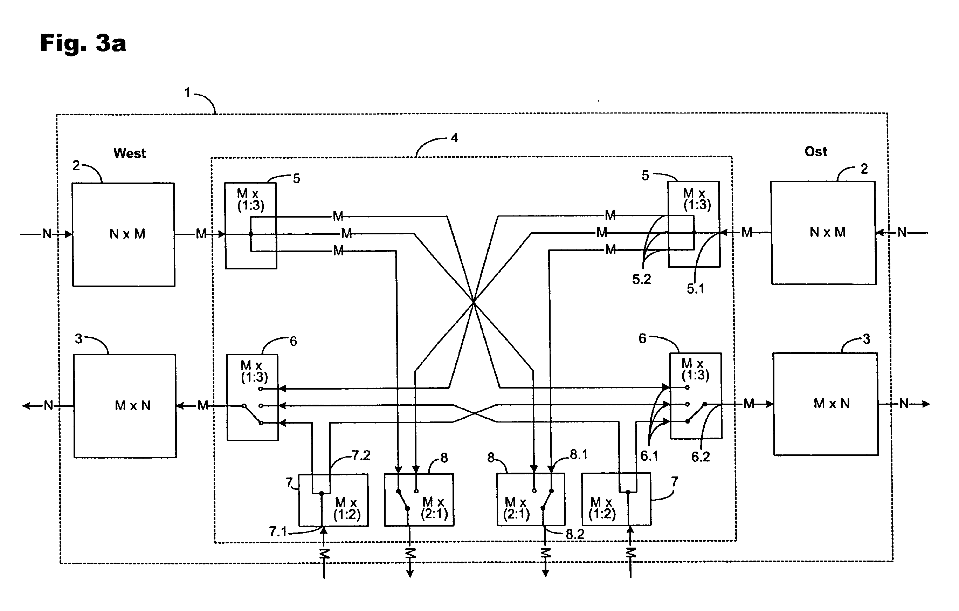

Ein Beispiel eines komplexeren Aufbaues einer optischen Ersatzschaltung ist in der Figur 3 gezeigt. Die detaillierte Ausführung zeigt ein (4Nx4N)-Koppelfeld 1, das eine optische (1+1)-Kanalersatzschaltung in Ringen (dedicated protection ring, DPRING) unterstützten kann. In der Darstellung ist, ebenso wie in allen folgenden Figuren lediglich eine Ebene, das heißt ein Modul der N gleichen ADP-Module 4 gezeigt.

Jedes ADP-Modul 4 verfügt über zwei 1:3-Eingangsverteiler 5, die einen Kanal aus dem NxN-Eingangskoppler 2 derart verteilen, daß eine Verbindung zum gegenüberliegenden NxN-Ausgangskoppler 3 mit seinem vorgeschalteten steuerbaren 1:3-Ausgangsschalter 6 und zwei Verbindungen zu zwei 2:1-Schaltern 8 auf der Zubringer-Seite entstehen. Des weiteren verfügt jedes ADP-Modul 4 über zwei 1:2-Verteiler die ihre eingehenden Kanäle auf jeweils einen 3:1-Ausgangsschalter der beiden anderen Seiten (West und Ost) verteilen.

Das resultierende (4Nx4N)-Koppelfeld der Figur 3 ist innerhalb dieser vorgesehenen Verbindungsstrukturen, die der Ausführung in der Figur 2 entsprechen, blockierungsfrei ausgeführt.

Die Figur 3a zeigt ein erfindungsgemäßes optisches Koppelfeld, das entsprechend dem Koppelfeld aus Figur 3 aufgebaut ist, jedoch werden hier nicht quadratische NxN-Eingangskoppler, sondern MxN-Eingangs- und MxN-Ausgangskoppler verwendet. Die Funktionsweise und Verbindungsstruktur entspricht der aus Figur 3.

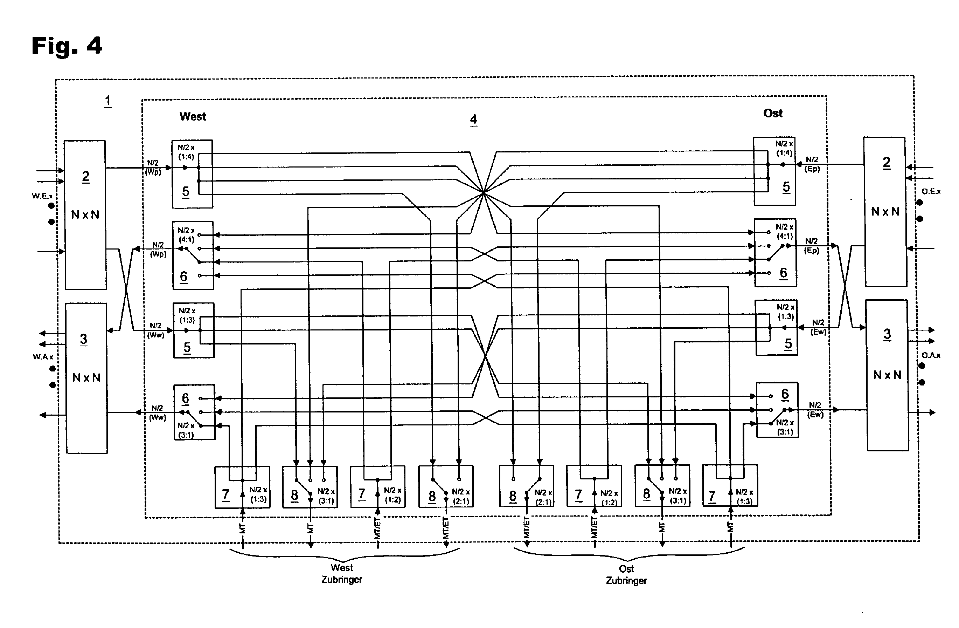

Die Figur 4 zeigt ein (4Nx4N)-Koppelfeld 1, dessen ADP-Module 4 zusätzlich zur Figur 4 eine optische Kanalersatzschaltung in 2-Faser-Ringen mit verteilten Ersatzkanälen (2 fiber shared protection ring, 2F-SPRING) unterstützt. Hierfür müssen von einem ADP-Modul 4 vier Kanäle verarbeitet werden, ein solches ADP-Modul 4 kann durch Zusammenfassung zweier ADP-Module aus Figur 3 und der Ergänzung der nötigen Ersatzschaltewege für das 2F-SPRING-Verfahren entstehen. Auf die Ersatzkanäle kann hier auch sogenannter "extra traffic" geschaltet werden, um die Ringkapazität im fehlerfreien Fall voll zu nutzen. Die Funktionsweise des 2F-SPRING-Verfahrens für optische Kanäle entspricht dem in ITU-T G.841 beschriebenen Verfahren für virtuelle Kanäle (VC-4) in SDH-Netzen.

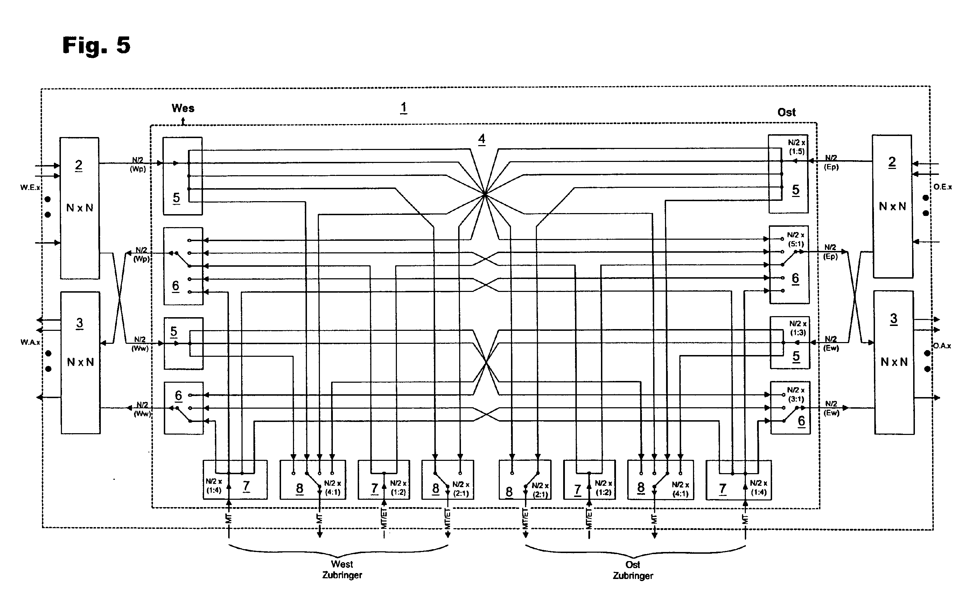

Die Figur 5 zeigt eine Weiterentwicklung des (4Nx4N)-Koppelfeldes aus der Figur 4. Dessen ADP-Module 4 verfügen über weitergehende Vernetzungen zu den in Figur 4 verwendeten. So wird hier eine optische Kanalersatzschaltung in 4-Faser-Ringen mit verteilten Ersatzkanälen (4 fiber shared protection ring, 4F-SPRING) unterstützt. Auch hier kann auf die Ersatzkanäle sogenannter "extra traffic" geschaltet werden, um die Ringkapazität im fehlerfreien Fall voll zu nutzen. Die Funktionsweise des 4F-SPRING-Verfahrens für optische Kanäle entspricht dem in ITU-T G.841 beschriebenen Verfahren für virtuelle Kanäle (VC-4) in SDH-Netzen.

Es wird noch darauf hingewiesen, dass die Bezeichnungen Ax(B:C) in den Schaltern und Verteilern 5 bis 8 bedeutet, dass es sich um A-fache Schalter oder Verteiler mit B Eingängen und C Schalterstellungen beziehungsweise Ausgängen handelt.

Abschließend ist darauf hinzuweisen, dass es auch im Rahmen der Erfindung liegt die internen Verbindungsnetze eines OADM mit unterschiedlichen ADP-Modulen für unterschiedliche optische Kanäle aufzubauen, wodurch die Komplexität und Flexibilität des Koppelfeldes den jeweiligen Anforderungen durch die externe Netzstruktur angepasst werden kann.

Zusammenfassend schlägt der Erfinder also vor, einen konfigurierbaren optischen Koppler zum Ein- und Auskoppeln von Datenströmen aus und in einen optischen WDM-Datenübertragungsring dadurch zu erhalten, dass mehrere MxN-Koppler, vorzugsweise 4 quadratische NxN-Durchgangskoppler, derart über ein Netzwerk von Schaltern und Verzweigern zusammen geschaltet werden, dass möglichst beliebige Verbindungen zwischen den in die Datenstrecke eingeschalteten Ein- und Ausgängen und zwischen abzweigenden Zu- und Abgängen geschaltet werden können, wobei vorzugsweise auch gleichzeitig eine mögliche Ersatzschaltung der optischen Kanäle erreicht werden kann.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Optisches Koppelfeld als Zwischenglied in einer optischen Datenübertragungsstrecke eines WDM-Ringübertragungssystems zur variablen Ein- und/oder Auskopplung einer Vielzahl optischer Kanäle, wobei eine erste Seite (West-Seite) mit N Eingangskanälen (W.E.x) und eine zweite Seite (Ost-Seite) mit N Ausgangskanälen (O.A.x) zur Einbindung in die optische WDM-Datenübertragungsstrecke und weiterhin eine dritte Seite (Zubringer-Seite) mit einer Vielzahl ein- und/oder ausgekoppelter Kanäle (T.A.x, T.E.x) vorgesehen sind, wobei auf der ersten Seite ein MxN-Eingangskoppler (2) für die N Eingangskanäle (W.E.x) und auf der zweiten Seite ein MxN-Ausgangskoppler für die N Ausgangskanäle (O.A.x) vorgesehen ist, und wobei die erste und zweite Seite durch ein variabel schaltbares Netzwerk (4) untereinander und mit den Ein- und Ausgangskanälen der dritten Seite verbunden sind.

2. Optisches Koppelfeld gemäß dem voranstehenden Anspruch 1, **dadurch gekennzeichnet, daß** auf der ersten Seite ein MxN-Ausgangskoppler (3) für zusätzliche N Ausgangskanäle (W.A.x) und auf der zweiten Seite ein MxN-Eingangskoppler (2) für zusätzliche N Eingangskanäle (O.E.x) vorgesehen ist.

3. Optisches Koppelfeld gemäß einem der voranstehenden Ansprüche 1 bis 2, **dadurch gekennzeichnet, daß** das variabel schaltbare Netzwerk (4) an mindestens einem Eingangskanal hinter dem MxN-Eingangskoppler (2) der ersten und/oder zweiten Seite einen Verteiler (5) mit einem Verteilereingang (5.1) und mindestens zwei Verteilerausgängen (5.2) aufweist, wobei mindestens ein Verteilerausgang zu einem Ausgangskanal auf der jeweils gegenüberliegenden Seite und mindestens ein Verteilerausgang zu einem Ausgang auf der dritten Seite führt.

4. Optisches Koppelfeld gemäß einem der voranstehenden Ansprüche 1 bis 3, **dadurch gekennzeichnet, daß** das variabel schaltbare Netzwerk (4) an mindestens einem Ausgangskanal vor dem MxN-Ausgangskoppler (3) der ersten und/oder zweiten Seite einen steuerbaren Schalter (6) mit mindestens zwei Schaltereingängen (6.1) und einem Schalterausgang (6.2) aufweist, wobei mindestens ein Schaltereingang mit einem Eingangskanal auf der jeweils gegenüberliegenden ersten oder zweiten Seite und mindestens ein Schaltereingang zu einem Eingangskanal auf der dritten Seite führt.

5. Optisches Koppelfeld gemäß einem der voranstehenden Ansprüche 1 bis 4, **dadurch gekennzeichnet, daß** das variabel schaltbare Netzwerk (4) auf der dritten Seite (Zubringer-Seite) an mindestens einem Eingangskanal ein Verteiler (7) mit einem Verteilereingang (7.1) und mindestens zwei Verteilerausgängen (7.2) aufweist, wobei mindestens ein Verteilerausgang zu einem Ausgangskanal auf der ersten oder zweiten Seite führt.

6. Optisches Koppelfeld gemäß einem der voranstehenden Ansprüche 1 bis 5, **dadurch gekennzeichnet, daß** das variabel schaltbare Netzwerk (4) auf der dritten Seite an mindestens einem Ausgangskanal einen Schalter (8) mit einem Schalterausgang (8.2) und mindestens zwei Schaltereingängen (8.1) aufweist, wobei mindestens ein Schaltereingang zu einem Eingangskanal auf der ersten oder zweiten Seite führt.

7. Optisches Koppelfeld gemäß einem der voranstehenden Ansprüche 1 bis 6, **dadurch gekennzeichnet, daß** die Eingangs- und/oder Ausgangskoppler (2, 3) als NxN-Schalter mit quadratischem Aufbau vorgesehen sind.

8. Optisches Koppelfeld gemäß einem der voranstehenden Ansprüche 1 bis 7, **dadurch gekennzeichnet, daß** auf der dritten Seite N Ausgangsschalter 8) und N Eingangsverteiler (7) vorgesehen sind.

9. Optisches Koppelfeld gemäß einem der voranstehenden Ansprüche 1 bis 8, **dadurch gekennzeichnet, daß** das variable Netzwerk (4) derart aufgebaut ist, daß eine einfach-redundante (1+1) -Ringersatzschaltung vorliegt.

10. Optisches Koppelfeld gemäß einem der voranstehenden Ansprüche 1 bis 8, **dadurch gekennzeichnet, daß** das variable Netzwerk (4) derart aufgebaut ist, daß eine 2- oder 4-Faser-Ringersatzschaltung mit verteilter Redundanz vorliegt.

11. Optisches Koppelfeld gemäß einem der voranstehenden Ansprüche 1 bis 10, **dadurch gekennzeichnet, daß** die Funktionen des variablen Netzwerkes (4) mit Schaltern (6, 8) und Verteilern (5, 7) in mindestens einem ADP-Modul (4.x), vorzugsweise je Kanal in einem ADP-Modul mit insgesamt N ADP-Modulen (4.1-4.N), zusammengefaßt sind.
